# EUROPEAN PATENT SPECIFICATION

(11) **EP 3 036 951 B1**
(45) Date of publication and mention of the grant of the patent: **22.08.2018**
(21) Application number: 13818848.7
(22) Date of filing: 05.12.2013
(51) Int. Cl.: H04W 72/12

(54) **METHODS AND NETWORK NODES FOR MANAGEMENT OF RESOURCES**
VERFAHREN UND NETZWERKKNOTEN ZUR VERWALTUNG VON RESSOURCEN
PROCÉDÉS ET NOEUDS DE RÉSEAU POUR LA GESTION DE RESSOURCES

(30) Priority: 22.08.2013 US 201361868602 P
(43) Date of publication of application: 29.06.2016
(73) Proprietor: Telefonaktiebolaget LM Ericsson (publ), 164 83 Stockholm (SE)
(72) Inventor: SORRENTINO, Stefano, S-171 68 Solna (SE); WÄNSTEDT, Stefan, S-972 51 Luleå (SE); LU, Qianxi, Beijing 100102 (CN); LI, Yunxi, S-175 46 Järfälla (SE)
(74) Representative: Zacco Sweden AB
(86) International application number: PCT/SE2013/051454
(87) International publication number: WO 2015/026277

(56) References cited:
- US-A1- 2008 002 658
- ZTE: "Solution for ProSe discovery and communication", 3GPP DRAFT; S2-130979-ZTE_ARCH ALT FOR PROSE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, USA; 20130408 - 20130412 2 April 2013 (2013-04-02), XP050708226, Retrieved from the Internet: URL:http://www.3gpp.org/ftp/tsg_sa/WG2_Arc h/TSGS2_96_San_Diego/Docs/ [retrieved on 2013-04-02]

## Description

### TECHNICAL FIELD

Embodiments herein relate to wireless communication systems, such as telecommunication systems. In particular, embodiments herein relate to management of resources in a mixed cellular and device-to-device radio network. A wireless device and a method therein for enabling management, by a radio network node, of resources and a radio network node and a method therein for managing resources are disclosed.

### BACKGROUND

Device-to-device (D2D) communication is a well-known and widely used component of many existing wireless technologies, including ad hoc and cellular networks. Some examples include Bluetooth and several variants of the Institute of Electrical and Electronics Engineers (IEEE) 802.11 standards suite such as WiFi Direct. These systems operate in an unlicensed radio spectrum.

Recently, D2D communications as an underlay to cellular networks have been proposed, see for example US 2008/0002658, as a means to take advantage of the proximity of communicating devices and at the same time to allow devices to operate in a controlled interference environment. Typically, it is suggested that such D2D communication shares the same spectrum as the cellular system, for example by reserving some of the cellular uplink resources for D2D purposes. It is recalled that the cellular system typically operate in a licensed radio spectrum. Allocating dedicated spectrum for D2D purposes is a less likely alternative as radio spectrum is a scarce resource and sharing between the D2D services and cellular services is more flexible and provides higher spectrum efficiency. This kind of cellular radio networks, in which D2D communication may be operated as an underlay to the cellular communication may herein be referred to as mixed cellular and D2D radio networks.

Devices that wish to communicate, or even just discover each other, typically need to transmit various forms of control signalling. One example of such control signalling is the so-called beacon signal, or discovery signal, which at least carries some form of identity. The beacon signal is transmitted by a device that wishes to be discoverable by other devices. Other devices can scan for the beacon signal. Once the other devices have detected the beacon signal, they can take the appropriate action, for example to try to initiate a connection setup with the device, which transmitted the beacon signal. For certain communication modes, e.g. connectionless communication modes, which typically are employed for group-cast and broadcast transmission, the beacon signal may carry a scheduling assignment indicating the associated data transmission to potential receivers. A connectionless communication mode is typically a unidirectional communication mode that does not require acknowledged connection setup.

The ProSe Study Item, e.g. Third Generation Partnership Project (3GPP) TR 22.803 Feasibility study for Proximity Services (ProSe) (Release 12) and 3GPP TS 22.278 Service requirements for the Evolved Packet System (EPS) (Release 12), recommends also supporting D2D operation for UEs that are out of network coverage. In such a case, different synchronization options are possible: UEs may synchronize to a global reference, e.g., a Global Positioning System (GPS), which is in general different from the synchronization reference of deployed networks. Possibly UEs may operate in a fully asynchronous fashion (no synchronization reference, at least for discovery). A further option is that clusters of UEs synchronize to a specific UE. The specific UE is in the following referred to as a Cluster Head (CH), which provides local synchronization to its neighbour UEs. Different clusters are not necessarily synchronized. The Cluster Head may have capabilities similar to a base station with regard to scheduling of UEs connected to, i.e. controlled by, the Cluster Head.

If out of network coverage synchronization is based on synchronization signals transmitted by CHs, it is necessary that UEs synchronize to the suitable synchronization reference (CH). A number of procedures may be considered, with some similarities to cell search in cellular networks, where idle UEs search for synchronization signals from different cells and synchronize to, e.g., the cell with best signal strength. Similarly, ProSe enabled out of network coverage UEs might synchronize to the strongest CH in proximity.

UEs may discover unsynchronized beacons on a given carrier, or sub-band, by searching for discovery beacons in time over their configured/predefined resources. This can be done, e.g., by time domain correlation of the received signal with the beacons waveforms, similarly to the way UEs search for cells using PSS/SSS.

UEs alternate wake up and sleep cycles for reducing power consumption, so called discontinuous reception (DRX). During sleep periods, only the memory and clocks are active, but the UE is unable to receive any signal. During wake up time, the receiver is on. It is essential that the wake up time periods are as narrow as possible compared to the sleep time in order to save battery.

Looking at coverage in a bit more detail, there are basically three different cases. In one case all communicating UEs are within network coverage. In this case the network also controls the D2D communication, such synchronization, scheduling, etc. The next case is when all communicating user equipments (UEs) are out of network coverage. In this case the UEs will probably rely on pre-configured information, i.e. information that was obtained when the UE was connected to a network. With the use of beacons and scheduling requests/grants other information is exchanged, such as synchronization and resources to use. A third case, partial coverage, is characterized by where some of the communicating UEs are within network coverage and some are not.

It is observed that the concept of out of coverage is specified to some extent in the ProSe requirements, e.g. 3GPP TR 22.803 Feasibility study for Proximity Services (ProSe) (Release 12).

In certain scenarios, like the three cases above, performance, e.g. in terms of fast and efficient D2D communication, may be poor.

### SUMMARY

The reader is referred to the appended independent claims. Some preferred features are laid out in the dependent claims.

An object is to improve resource management in a mixed cellular and D2D radio network of the above mentioned kind.

According to an aspect, the object is achieved by a method, performed by a wireless device, for enabling management, by a radio network node, of resources. The resources are comprised in a cellular spectrum of a mixed cellular and D2D radio network. The mixed cellular and D2D radio network comprises the radio network node and the wireless device. The wireless device sends, to the radio network node, a first message relating to a first set of resources. The first message indicates to the radio network node that the first set of resources is to be avoided by the radio network node when the radio network node allocates resources for cellular transmissions associated with the wireless device. The wireless device sends, to the radio network node, a second message relating to the first set of resources. The second message indicates to the radio network node that the first set of resources is available for use by the radio network node when the radio network node allocates resources for cellular transmissions associated with the wireless device.

According to another aspect, the object is achieved by a wireless device configured to enable management, by a radio network node, of resources. The resources are comprised in a cellular spectrum of a mixed cellular and D2D radio network. The mixed cellular and D2D radio network comprises the radio network node and the wireless device. The wireless device configured to send, to the radio network node, a first message relating to a first set of resources. The first message indicates to the radio network node that the first set of resources is to be avoided by the radio network node when the radio network node allocates resources for cellular transmissions associated with the wireless device. Moreover, the wireless device is configured to send, to the radio network node, a second message relating to the first set of resources. The second message indicates to the radio network node that the first set of resources is available for use by the radio network node when the radio network node allocates resources for cellular transmissions associated with the wireless device.

According to a further aspect, the object is achieved by a method, performed by a radio network node, for managing resources. The resources are comprised in a cellular spectrum of a mixed cellular and D2D radio network. The mixed cellular and D2D radio network comprises the radio network node and the wireless device. The radio network node receives, from the wireless device, a first message relating to a first set of resources. The first message indicates to the radio network node that the first set of resources is to be avoided by the radio network node when the radio network node allocates resources for cellular transmissions associated with the wireless device. The radio network node receives, from the wireless device, a second message relating to the first set of resources. The second message indicates to the radio network node that the first set of resources is available for use by the radio network node when the radio network node allocates resources for cellular transmissions associated with the wireless device.

According to a still other aspect, the object is achieved by a radio network node configured to manage resources. The resources are comprised in a cellular spectrum of a mixed cellular and D2D radio network. The mixed cellular and D2D radio network comprises the radio network node and the wireless device. The radio network node is configured to receive, from the wireless device, a first message relating to a first set of resources. The first message indicates to the radio network node that the first set of resources is to be avoided by the radio network node when the radio network node allocates resources for cellular transmissions associated with the wireless device. Moreover, the radio network node is configured to receive, from the wireless device, a second message relating to the first set of resources. The second message indicates to the radio network node that the first set of resources is available for use by the radio network node when the radio network node allocates resources for cellular transmissions associated with the wireless device.

The radio network node may receive a message, such as the first message, from the wireless device. The message may relate to resources. As an example, the resources related to the message may not be allowed, e.g. rather as suggested by the wireless device, to be used by the radio network node when scheduling the wireless device for cellular communication. The message may include a report relating to D2D activities of the wireless device. The D2D activities of the wireless device may be a state, a condition or a mode, which may indicate discoverable, non-discoverable, start/stop of reception of D2D data. Hence, the report may indicate discoverable, non- discoverable, start/stop of reception of D2D data. Since the D2D activities may be associated with different sets of resources, also the report may relate to resources. The radio network node may not be allowed to use the different sets of resources, depending on the D2D activities of the wireless device, when scheduling the wireless device for cellular communication. Subsequently, the radio network node may receive a further message, such as the second message. In response to reception of the further message, the radio network node is allowed to use the resources indicated by the message. Consequently, resources, e.g. the first set of resources, are dynamically shared between cellular transmissions and D2D transmissions.

Advantageously, the aspects herein eliminates, or at least mitigates, problems with collisions between D2D broadcast communication and cellular uplink scheduling, considering both in-coverage and out-of-coverage cases. The problem solved will be analysed in more detail below.

### BRIEF DESCRIPTION OF THE DRAWINGS

The various aspects of aspects disclosed herein, including particular features and advantages thereof, will be readily understood from the following detailed description and the accompanying drawings, in which:
Figure 1 is a schematic overview of an exemplifying radio network in which aspects herein may be implemented,
Figure 2 is a schematic, combined signalling scheme and flowchart illustrating aspects of the methods when performed in the radio network according to Figure 1,
Figure 3 is another schematic, combined signalling scheme and flowchart illustrating aspects of the methods when performed in the radio network according to Figure 1,
Figure 4 is a further schematic, combined signalling scheme and flowchart illustrating aspects of the methods when performed in the radio network according to Figure 1,
Figure 5 is yet another schematic, combined signalling scheme and flowchart illustrating aspects of the methods when performed in the radio network according to Figure 1,
Figure 6 is a flowchart illustrating aspects of the method in the wireless device,
Figure 7 is another flowchart illustrating aspects of the method in the wireless device,
Figure 8 is a block diagram illustrating aspects of the wireless device,
Figure 9 is a flowchart illustrating aspects of the method in the radio network node,
Figure 10 is another flowchart illustrating aspects of the method in the radio network node,
Figure 11 is a block diagram illustrating aspects of the radio network node, and
Figure 12 is yet another schematic, combined signalling scheme and flowchart illustrating aspects of the methods when performed in the radio network according to Figure 1.

### DETAILED DESCRIPTION

In order to better appreciate the advantageous features of the embodiments herein, problems - as realized by the present inventors - of prior art will be discussed here.

When a ProSe enabled UE-A, either in coverage or out-of-coverage, initializes a broadcast that reaches a UE-B that is within coverage, UE-B may not be able to receive data if it simultaneously transmits/receives data to/from an evolved Node B (eNB). This may result in that important communication is not received or at least severely delayed.

In 3GPP, D2D peer discovery and broadcast communication are discussed for Release 12. A key problem in D2D communication and discovery is the resource collision with transmissions in the cellular radio network, such as Long Term Evolution (LTE), due to missing coordination. E.g. one UE would be scheduled by LTE to send data in UL and be expected to receive D2D broadcast communication from other D2D UE at the same time. A particularly complicated scenario is when the D2D transmitting UE lacks network coverage, or network control. According to embodiments herein, it is shown how to avoid collisions for the UEs that are active both with D2D and LTE. In particular, collision between LTE UL transmission (TX) and D2D reception (RX) activity. A difficult point of this problem is, for broadcast communication, that it may be harder for the network to identify the D2D Rx in advance, compared to unicast/group-cast traffic where the D2D data is sent from one UE to other UE(s) over dedicated channels.

As another example, when the receiving UE is within coverage, including either case that the transmitting UE is in coverage or out-of-coverage, it may be that the receiving UE communicates on the UL with an eNB. Such communication, on the UL, may prevent the UE from receiving the D2D broadcast from the UE that is out of coverage.

Throughout the following description similar reference numerals have been used to denote similar elements, units, modules, circuits, nodes, parts, items or features, when applicable. In the Figures, features that appear in some embodiments are indicated by dashed lines.

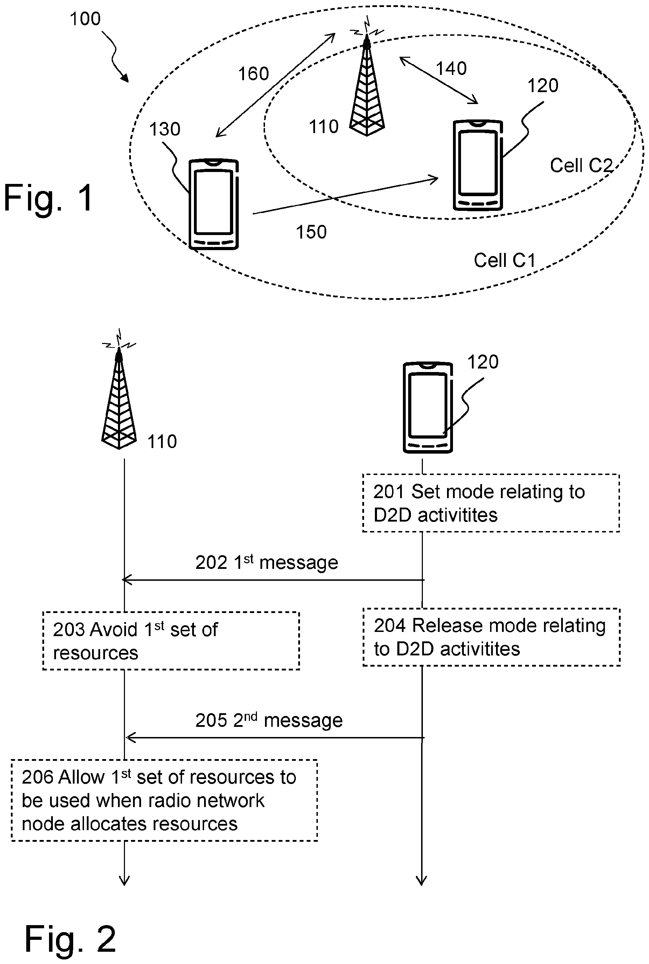

**Figure 1** depicts an exemplifying **mixed cellular and D2D radio network 100** in which embodiments herein may be implemented. In this example, the radio network 100 is a Long Term Evolution (LTE) system. In other examples, the radio network 100 may be any 3GPP cellular communication system, such as a Wideband Code Division Multiple Access (WCDMA) network, a Global System for Mobile communication (GSM network), an evolution of any one of the above mentioned systems or the like.

The radio network 100 comprises **a radio network node 110.** As used herein, the term "radio network node" may refer to an eNB, a control node controlling one or more Remote Radio Units (RRUs), a radio base station, an access point or the like. The radio network node 110 may be configured to operate over a so called system bandwidth. A portion of the system bandwidth may be reserved, statically or dynamically, for D2D communication.

The radio network node 110 may operate **a cell C1, C2.** More generally, the cell C1 may be comprised in the radio communication system 100. The cell C1, C2 is shown for two different scenarios. In a first scenario, the cell C1 is shown to indicate that both wireless devices, which are described below, are within coverage of the radio network node 110. In a second scenario, the cell C2 is shown to indicate that only one of the wireless devices are within coverage of the radio network node 110. In the second scenario, it may be preferred that the wireless device within coverage is close to, or at, a border of the cell C2.

Moreover, **a wireless device 120** may be in range for D2D communication with **a further wireless device 130.** The wireless device 120 may be located inside the cell C1, C2.

Furthermore, the further wireless device 130 may be located outside the cell C2. As used herein, the term "wireless device" may refer to a user equipment (UE), a mobile phone, a cellular phone, a Personal Digital Assistant (PDA) equipped with radio communication capabilities, a smartphone, a laptop or personal computer (PC) equipped with an internal or external mobile broadband modem, a tablet PC with radio communication capabilities, a portable electronic radio communication device, a sensor device equipped with radio communication capabilities or the like. The sensor may be any kind of weather sensor, such as wind, temperature, air pressure, humidity, etc. As further examples, the sensor may be a light sensor, an electronic switch, a microphone, a loudspeaker, a camera sensor, etc.

In other examples, the further wireless device 130 may be located inside the cell C1, i.e. in range for communication with the radio network node 110.

As used herein, the term "D2D communication" refers to that, for example, D2D broadcasting of data, from the further wireless device 130 to the wireless device 120, is performed by using an underlay of the cellular part of the mixed cellular and D2D radio network 100. This is in contrast to D2D technologies such as Bluetooth, Near Field Communication (NFC) and the like. These D2D technologies do not use radio resources of the cellular spectrum and do not constitute an underlay to a cellular radio network according to a 3GPP standard specification or the like. Furthermore, as used herein, the term "mixed cellular and D2D radio network" shall be understood to mean that D2D communication is an underlay to communication in a cellular radio network as described above.

As used herein, the term "resource" may refer to a certain coding of a signal and/or a time frame and/or a frequency range in which the signal is transmitted. In some examples, a resource may refer to one or more physical resource blocks (PRB) which are used when transmitting the signal. In more detail, a PRB may be in the form of Orthogonal Frequency Division Multiplexing (OFDM) physical resource blocks, or single-carrier frequency-division multiple access (SC-FDMA) physical resource blocks. The term "physical resource block" is known from 3GPP terminology relating to e.g. Long Term Evolution Systems. Generally, the resources may be uplink or downlink resources with respect to the cellular part of the mixed cellular and D2D radio network.

Cellular transmissions may be **sent 140** between the radio node 110 and the wireless device 120.

The further wireless device 130 may **send 150** broadcast data, or any other kind of information e.g. uni-cast data, to the wireless device 120, UE B. This kind of direct communication between the wireless device 120 and the further wireless device 130 may be referred to as D2D communication as mentioned above. The D2D communication may be an underlay to communication in a cellular part of the mixed cellular and D2D radio network 100.

Cellular transmissions may also be **sent 160** between the radio node 110 and the further wireless device 130.

The cellular transmissions, the D2D transmissions/communication, the broadcast data and/or the like may be sent over a radio interface. The radio interface may be any 3GPP radio interface, such as an interface according to UMTS Terrestrial Radio Access Network (UTRAN) networks, where UTMS is short for Universal Mobile Telecommunications System, Evolved-UTRAN or the like.

The wireless device and the further wireless device are capable of being operated in the mixed cellular and D2D radio network 100. The set of resources are comprised in a cellular spectrum of the mixed cellular and D2D radio network.

**Figure** 2 illustrates an exemplifying method for managing resources when implemented in the radio network 100 of Figure 1. As an example, the wireless device 120 performs a method for enabling management, by a radio network node 110, of resources. Also as an example, the radio network node 110 performs a method for managing resources.

The following actions may be performed in any suitable order.

### Action 201

In order to prepare the wireless device 120 for D2D communication, the wireless device 120 may set a mode relating to D2D activities of the wireless device 120. The mode relating to D2D activities may indicate one or more of discoverable, non-discoverable and start/stop of reception of D2D data. As an example, a user may activate, e.g. via menus in a graphical user interface of the wireless device 120, D2D communication. This will e.g. cause the wireless device 120 to set the mode to indicate discoverable. As a further example, when reception of D2D data begin, the mode may indicate start of reception of D2D data, and similarly when reception of D2D data ends, the mode may indicate stop of reception of D2D data. In action 202 below, it is elaborated how the mode affects behaviour of the wireless device 120.

### Action 202

So as to make the radio network node 110 aware of a first set of resources, the wireless device 120 sends, to the radio network node 110, a first message relating to the first set of resources. The first message indicates to the radio network node 110 that the first set of resources is to be avoided by the radio network node 110 when the radio network node 110 allocates resources for cellular transmissions associated with the wireless device 120. Hence, the radio network node 110 may not schedule cellular transmission to the first set of resources.

In some examples, the first message may include a report of the mode relating to D2D activities. In these examples, the first message is sent in response to that action 201 has been performed. In this manner, the radio network node 110 is informed about the mode, or state, of the wireless device 120.

Generally, the first message may instruct the radio network node 110 to register the wireless device 120 as discoverable and/or as being able to receive D2D broadcast data. In some examples, the first set of resources, which are to be avoided by the radio network node 110, may be predefined, or configured in the radio network node 110 prior to receiving the first message. In such case, the first message need not specify, or indicate, the first set of resources. Even so, the first message is related to the first set of resources as mentioned above.

In case the first message indicates discoverable, or a discovery mode, i.e. the first message instructs the radio node 110 to register the wireless device 120 as discoverable, the first message may be said to comprise a first discovery message. This is similar to action 302 below.

When, in action 201, the mode relating to D2D activities indicates discoverable, i.e. D2D communication is enabled by the wireless device 120, the present action 202 may be performed in response thereto
As mentioned above, D2D communication may be enabled when a user of the wireless device 120 interacts, e.g. via menus or buttons of the wireless device 120, with the wireless device 120. Alternatively or additionally, D2D communication may be enabled when the wireless device 120 detects that the wireless device 120 is close to or at a border of a cell operated by the radio network node 110.

In case the first message indicates start of reception of D2D data, or a broadcast mode, i.e. the first message instructs the radio network node 110 to register the wireless device 120 as being able to receive D2D broadcast data, the first message may be said to comprise a first data message. This is similar to action 305 below.

In this case, the mode relating to D2D activities may be set when the wireless device 120 detects a beacon signal from a further wireless device 130. Then, the present action 203 may be performed in response thereto.

### Action 203

Now that the radio network node 110 has received the first message in action 202, the radio network node 110 may avoid the first set of resources when the radio network node 110 allocates resources for cellular transmissions associated with the wireless device 120. The radio network node 110 may avoid the first set of resources in response to receiving the first message. Thanks to that the first set of resources is avoided, interference, e.g. collisions, between cellular transmissions and D2D communication is reduced. This action is similar to action 303 and/or action 306 below.

### Action 204

In order for the wireless device 120 to exit, or change, the mode relating to D2D activities, the wireless device 120 may release, for the wireless device 120, the mode relating to D2D activities. The mode relating to D2D activities may be released when a time period has lapsed since the first message was sent in action 202. In action 205, it is elaborated how the behaviour of the wireless device 120 is affected by that the mode is released.

### Action 205

In order to inform the radio network node 110 that the first set of resources may again be available for use by the radio network node 110 when allocating, or scheduling, resources for cellular transmission, the wireless device 120 sends, to the radio network node 110, a second message relating to the first set of resources. Thus, the second message indicates to the radio network node 110 that the first set of resources is available for use by the radio network node 110 when the radio network node 110 allocates resources for cellular transmissions associated with the wireless device 120.

Generally, the second message may instruct the radio network node 110 to unregister the wireless device 120 as discoverable and/or as being able to receive D2D broadcast data.

Moreover, the second message may include a report for releasing the mode relating to D2D activities. The report may carry instructions about what actions, as described below, the radio network node 110 may take. The present action 205 may be performed in response action 204 as described in the following.

In case, the second message indicates unregister of discovery mode, or non-discoverable, i.e. the second message instructs the radio network node 110 to unregister the wireless device 120 as discoverable, the second message may be said to comprise a second discovery message.

When, in action 204, the mode relating to D2D activities indicates non-discoverable, i.e. D2D communication is disabled by the wireless device 120, the present action 205 may be performed in response thereto.

Similarly to when the D2D communication is enabled, D2D communication may be disabled by that a user of the wireless device 120, the user interacting with the wireless device 120 interacts with the wireless device 120 to disable D2D communication. Alternatively or additionally, D2D communication may be disabled when the wireless device 120 detects that the wireless device 120 is far away from a border of a cell operated by the radio network node 110.

In case, the second message indicates an unregister broadcast mode, or stop of reception of D2D data, i.e. the second message instructs the radio network node 110 to unregister the wireless device 120 as being able to receive D2D broadcast data, the second message may be said to comprise a second data message.

When, in action 204, the mode relating to D2D activities indicates stop of reception of D2D data, i.e. the wireless device 120 may have detected that a transmission of the D2D broadcast data is complete, the present action 205 may be performed in response thereto.

### Action 206

In response to reception of the second message, the radio network node 110 may allow the first set of resources to be used when the radio network node 110 allocates resources for cellular transmissions associated with the wireless device 120. This means that the first set of resources is no longer reserved for D2D communication.

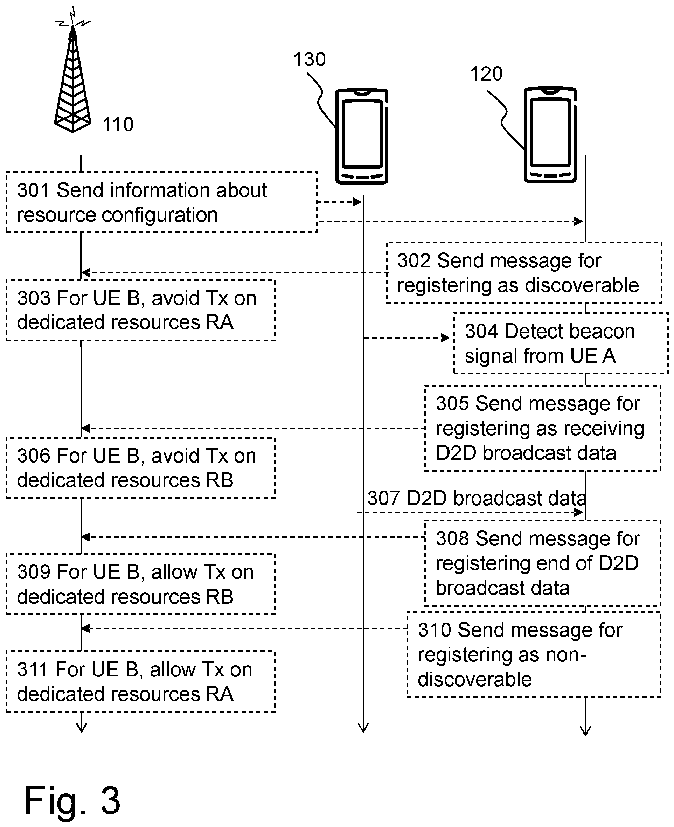

**Figure 3** illustrates a further exemplifying method for managing resource when implemented in the radio network 100 of Figure 1. As an example, the radio network node 110 performs a method for managing resources of the mixed cellular and D2D radio network 100. The mixed cellular and D2D radio network 100 may manage resources comprised in a cellular spectrum of the mixed cellular and D2D radio network 100. Moreover, as an example, the wireless device 120 and the further wireless device 130 may perform a method for enabling management, by the radio network node 110, of resources.

In the following scenario, at the wireless device 120 is within coverage of the radio network node 110. In some examples, the further wireless device 130 is also within coverage of the radio network node 110.

It shall be noted that in the description with reference to Figure 3, first, second, third and fourth messages may be different from what is described with reference to Figure 2.

First referring to messages as defined with reference to Figure 2 and then referring to messages as defined here with reference to Figure 3, we have that the first discovery message corresponds to the first message, the first data message corresponds to the second message, the second data message corresponds to the third message and the second discovery message corresponds to the fourth message.

The following actions may be performed in any suitable order.

### Action 301

The radio network node 110 may send information about resource configuration to the wireless device 120. Sometimes, for example when the further wireless device 130 is within coverage of the radio network node 110, the radio network node 110 may also send the information about resource configuration to the further wireless device 130. The information about resource configuration may indicate resources to be used for D2D discovery and/or resources to be used for D2D transmission of data, such as D2D broadcast data.

This action may be omitted if the wireless devices 120, 130 are pre-configured with the information about resource configuration.

### Action 302

The wireless device 120 may send a first message for registering as discoverable. The first message may be sent to the radio network node 110.

The first message may be sent in response to that a user of the wireless device 120 decides to enable D2D communication. Thus, the user interacts, via a button of the wireless device 120 or a user-interface item of a touch screen comprised in the wireless device, with the wireless device to enable the wireless device to discover or be discovered by neighbouring wireless devices, such as the further wireless device130.

Alternatively or additionally, the first message may be sent in response to that the wireless device detects that it is close to or at a border of the cell C2.
A first threshold value for power received from the radio network node 110 may be used to determine whether or not the wireless device 120 is considered to be close to or at the border of the cell C2.

### Action 303

The radio network node 110 may, at least for the wireless device 120, avoid transmission on dedicated resources RA, referred to as a first set of resources. This means that when the radio network node 110 schedules the wireless device 120 for cellular transmission, the radio network node 110 may not grant transmissions to/from the wireless device 120 on the dedicated resources RA.

### Action 304

The wireless device 120 may detect a beacon signal from the wireless device. This means that the wireless device 120 may receive and decode the beacon signal.

### Action 305

In response to the reception of the beacon signal, the wireless device 120 may send a second message for registering as being able to receive D2D broadcast data. In this manner, the radio network node 110 is made aware of that the wireless device 120 may receive D2D broadcast data.

### Action 306

The radio network node 110 may, at least for the wireless device 120, avoid transmission on dedicated resources RB, referred to as a second set of resources. This means that when the radio network node 110 schedules the wireless device 120 for cellular transmission, the radio network node 110 may not grant transmissions to/from the wireless device 120 on the dedicated resources RB.

### Action 307

The further wireless device 130 may send D2D broadcast data to, e.g. amongst other wireless devices, the wireless device 120.

### Action 308

When the wireless device 120 detects that the transmission of D2D broadcast data, as in Action 307, is complete, or is about to be completed, the wireless device 120 may send a third message for reporting end of D2D broadcast data. The third message may be sent to the radio network node 110. In this manner, the registration, at the radio network node 110 in Action 305 as receiving D2D broadcast data, may be released.

### Action 309

Thanks to that the radio network node 110 may receive the third message, it is made aware of that the dedicated resources RB are no longer used by the wireless device 120. Thus, the radio network node 110 may allow cellular transmission on the dedicated resource RB when scheduling the wireless device 120.

### Action 310

The wireless device 120 may send a fourth message for registering as non-discoverable. The fourth message may be sent to the radio network node 110.

The fourth message may be sent in response to that the user of the wireless device 120 decides to disable D2D communication. Thus, the user interacts, via the button or the user-interface item, with the wireless device 120 to disable the wireless device 120 to no longer be able to discover or be discovered by neighbouring wireless devices, such as the further wireless device 130.

Alternatively or additionally, the fourth message may be sent in response to that the wireless device 120 detects that it is far away from the border of the cell C2, i.e. the wireless device 120 is relatively close to the radio network node 110. A second threshold value for power received from the radio network node 110 may be used to determine whether or not the wireless device 120 is considered to be far away from the border.

### Action 311

Thanks to that the radio network node 110 may receive the fourth message, it is made aware of that the dedicated resources RA are no longer used by the wireless device 120. Thus, the radio network node 110 may allow cellular transmission on the dedicated resource RA when scheduling the wireless device 120.

More generally, action 302 and 305 may be that the wireless device 120 sends an indication of a group of resources to the radio network node. The group of resources may then not be used by the radio network node. This means that during scheduling, for cellular transmission, of the wireless device 120, the radio network node may not be allocated transmissions, such as data, on the group of resources.

Thereafter, while generalizing actions 304 and 307, the wireless device 120 may receive, from the further wireless device 130, any signal, such as data transmission, control signalling, beacon signal, discovery signal or the like, on the group of resources.

When the wireless device 120, or the further wireless device 130, detects that the use of the group of resources is finalized or about to be completed, the radio network node receives information indicating such completion of transmission on the group of resources.

Then, the radio network node 110 may, during scheduling for cellular transmission of the wireless device 120, again allocate transmissions to the group of resources.

Note that although the embodiments below, referred to as "first embodiment" and "second embodiment", are described as assuming UL resource usage by D2D, it is not necessarily limited to UL resources. Hence, in other examples, the resources used for D2D communication may be downlink resources in view of the cellular part of the mixed cellular and D2D radio network 100.

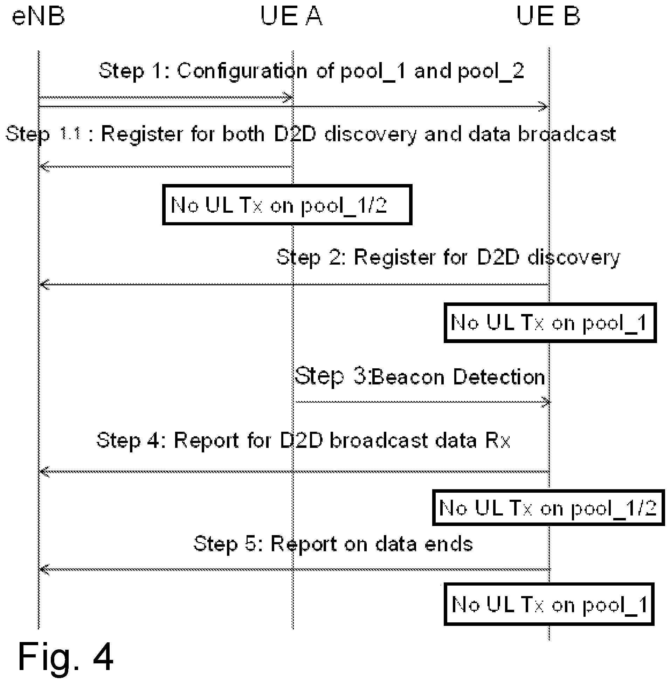

With reference to **Figure 4****,** a first exemplifying embodiment is illustrated. In the first embodiment, the wireless device 120 is an in-coverage UE B that receives broadcasts from the further wireless device 130, being another in-coverage UE A. This means that the cell C1 is considered. Hence, the wireless device 120 is referred to as UE B and the further wireless device 130 is referred to as UE A in the following.

In this case, both UE A and UE B are in-coverage as mentioned above, so by following a synchronization signal from the network, it would be possible to achieve synchronization between UEs and network. Specifically, the resource coordination may be divided into the following steps.

**Step 1:** The network, such as the radio network node 110 or eNB, broadcasts information about a common resource pool, pool_1, to the UEs. The common resource pool pool_1 is used for D2D peer discovery (in a synchronous way). Moreover, the radio network node 110 broadcasts information about another common resource pool pool_2 to the UEs. The other common resource pool pool_2 is used for D2D communication, not limited to the broadcast type traffic. The common resource pool configuration signalling can be delivered to UE via broadcast/dedicated signalling or pre-stored, or pre-configured, in the UEs. Hence, in this example, in relation to the example of Figure 2, the first set of resources comprises two sets of resources, wherein one of the sets, e.g. pool_1, may be used during discovery mode and the other set, e.g. pool_2, may be used during broadcast mode.

The cellular mode transmission on the pool_1 and pool_2 would be restricted, e.g., the UE may drop SR, CSI report on PUCCH, PRACH if colliding with these resources.

**Step 1.1:** Assume there is a D2D UE A that wishes to broadcast a signal to the UEs in proximity, it would need to report to the network before initiating the D2D broadcasting, e.g. limited to pool_2, so similarly to step 2 below, the network would avoid the UL scheduling of UE A on pool_2. Besides, the resource usage of UE B can be controlled / allocated by network in this step, or autonomously decided by UE A within pool_2.

**Step 2:** Every D2D enabled UE that wishes to Tx/Rx beacons, or beacon signals, for peer discovery, e.g. limited to pool_1, should first report to the network. In this way, by knowing which UE is sending or receiving beacons, the network would avoid the UL scheduling of these UEs on pool_1. The D2D transmitter can be triggered by D2D traffic data in the buffer, yet D2D receivers may be always enabled after RRC connection establishment, or just triggered by manual operation, e.g., press a button.

**Step 3:** Assume there is a D2D UE B, that has detected the beacon from UE A on pool_1, i.e., knowing there is a D2D broadcaster within its proximity.

**Step 4:** The UE B would need to report to the network, e.g., that UE A is detected, which resources are to be used for this D2D session, so the network would avoid the UL scheduling of UE B on pool_2, e.g. in all resources of pool_2, or just a sub-set of it.

**Step 5:** To stop the resource avoidance, there could be multiple ways. For example:
- In an explicit way: it could be triggered by an 'ending report', from Tx side, i.e., UE A reports that the traffic ends, since the network knows UE B is receiving from UE A, it can stop UE B as well, and/or triggered by Rx side, e.g. due to the mobility of UE B, it cannot receive UE A's data, i.e., UE B reports that the traffic ends. This report may be triggered by the expiration of a UE timer, which (re-)starts when new D2D data is received.
- In an implicit way: it could be triggered by a timer at both eNB/UE side: when the UE requests access to the pool, such access is implicitly granted for X ms without the UE continuously re-requesting it. But after expiration of the timer, if no new request from UEs, the pool is revoked.

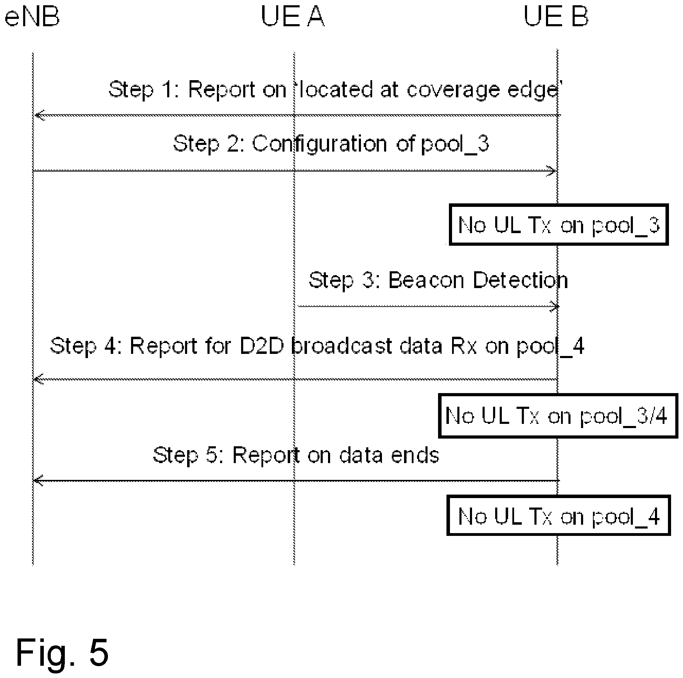

**Figure 5** shows an exemplifying second embodiment, in which an out-of-coverage UE A broadcasts to another in-coverage UE B. Similar to the example above, the UE B is an example of the wireless device 120 and the UE A is an example of the further wireless device 130.

In this case, since UE A is out-of-coverage, it is hard to follow a network synchronization signal like for in-coverage D2D UEs as in the first embodiment. Hence, as an initial step, UE B has to track the synchronization signal, e.g. a discovery/beacon signal, from UE A, before receiving the control/data signal, e.g. the broadcast data, from UE A. Specifically, the resource coordination can be divided into the following steps.

**Step 1:** UE B is located at network coverage edge, so it is possible that UE B would need to receive D2D data from out-of-coverage UE. Hence, it would firstly send a report to the network to let it know 'I am at network coverage edge'. This report can be pre-configured by network, in the form of an RRM measurement report, e.g., low level of RSRP, plus no neighbouring cell detected, and etc..

Please note that this report is not mandatory, i.e., the network can configure a pool_3 for all the UEs in its coverage, if considering we can know which cell(s) are potential coverage edge, based on network deployment. In this case, if pool_3 is a common configuration with the cell, the cellular mode transmission on the pool_3 would be restricted, e.g., the UE may drop SR, CSI report on PUCCH, PRACH if colliding with these resources.

**Step 2:** By knowing that UE B is located at network edge or elsewhere in the cell, within reach of UE A, the network configures a resource pool, pool_3, which is used for D2D beacon search, e.g. in an asynchronous way. This resource pool should be set according to the design of the D2D synchronization signal. E.g., if the D2D synchronization signal is sent every x sub-frames, the pools should include more than x subframes to track a D2D beacon, if any. The network would avoid UL scheduling of UE B on resource pool_3.

**Step 3:** UE A may start to broadcast beacon signal autonomously, since it is not covered by any network.

**Step 4:** When D2D UE B has detected the beacon from UE A on pool_3 in step 3, it knows there is an out-of-coverage D2D broadcaster within its proximity. Firstly, UE B needs to detect the resource usage pool_4 of UE A considering the timing difference between UE A and the network. As an example, this information can be partly included in the beacon. Secondly, it would need to report it to the network, e.g., who is detected, where is pool_4, so the network would avoid UL scheduling of UE B on pool_4.

**Step 5:** In this case, stopping the resource avoidance could be triggered in either explicit or implicit way, as stated in conjunction with the first embodiment above.

In view of the methods described above in Figure 2-5, the following summarizing remarks may be made:
In one exemplifying method in the radio network node, it is avoided that one wireless device is scheduled by cellular network (NW) and is involved in D2D activities at same time.

Some time period, named D2D resource pool, is introduced. D2D resource pool can be pre-configured by network and stored in the wireless device. D2D activities, such as broadcast communication, discovery etc., may only use the resource in its dedicated resource pool.

The wireless device, within network coverage, reports to network when it starts or stops D2D activities. When the wireless device does not start D2D activities, it can be scheduled by network without considering D2D resource pool. When the wireless device starts D2D activities, it should not be scheduled, not limited to UL scheduling, by the network to avoid using the corresponding D2D resource pool.

When the radio network node is aware of the resource pool for D2D activity, the cellular mode transmission / reception of wireless device would avoid usage of the resource pool, e.g., to drop UL Tx or DL Rx within the D2D resource pool.

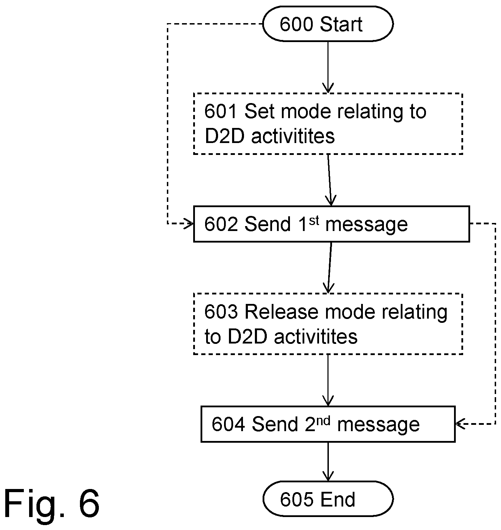

In **Figure 6****,** an exemplifying, schematic flowchart of the method in the wireless device 120 for enabling management, by the radio network node 110, of resources is shown.

As mentioned, the resources are comprised in a cellular spectrum of a mixed cellular and D2D radio network 100. The mixed cellular and D2D radio network 100 comprises the radio network node 110 and the wireless device 120. The D2D communication may be an underlay to communication in a cellular part of the mixed cellular and D2D radio network 100.

The following actions may be performed in any suitable order.

### State 600 - start state

At this stage, the wireless device 120 may typically have received information from the radio network node 110 about which resources may be used for D2D communication. Reference is for example made to action 301 in Figure 3 and Step 1 in Figure 4.

### Action 601

The wireless device 120 may set a mode relating to D2D activities of the wireless device 120. The first message includes a report of the mode relating to D2D activities. The sending of the first message is performed in response to the setting of the mode relating to D2D activities. This action is similar to action 201.
The mode relating to D2D activities may indicate one or more of discoverable, non-discoverable and start/stop of reception of D2D data.

### Action 602

The wireless device 120 sends, to the radio network node 110, a first message relating to a first set of resources. The first message indicates to the radio network node 110 that the first set of resources is to be avoided by the radio network node 110 when the radio network node 110 allocates resources for cellular transmissions associated with the wireless device 120. This action is similar to action 202.

As mentioned, the first message may instruct the radio network node 110 to register the wireless device 120 as discoverable and/or as being able to receive D2D broadcast data.

The first message may comprise a first discovery message that instructs the radio network node 110 to register the wireless device 120 as discoverable,

The setting of the mode relating to D2D activities may comprise enabling D2D communication by the wireless device 120. The method comprises sending the first discovery message in response to the enabling of the D2D communication.

The enabling of D2D communication may be performed by a user of the wireless device 120, the user interacting with the wireless device 120 to enable D2D communication and/or by detecting that the wireless device 120 is close to or at a border of a cell operated by the radio network node 110.

The first message may comprise a first data message that instructs the radio network node 110 to register the wireless device 120 as being able to receive D2D broadcast data.

The setting of the mode relating to D2D activities may comprise detecting a beacon signal from a further wireless device UE A. The method comprises sending the first data message in response to the detecting of the beacon signal.

### Action 603

The wireless device 120 may release, for the wireless device 120, the mode relating to D2D activities. The second message includes a report for releasing the mode relating to D2D activities. The sending of the second message is performed in response to the releasing of the mode relating to D2D activities. This action is similar to action 204.

The releasing of the mode relating to D2D activities may be performed when a time period has lapsed since the sending of the first message.

### Action 604

The wireless device 120 sends, to the radio network node 110, a second message relating to the first set of resources. The second message indicates to the radio network node 110 that the first set of resources is available for use by the radio network node 110 when the radio network node 110 allocates resources for cellular transmissions associated with the wireless device 120. This action is similar to action 205.

The second message may instruct the radio network node 110 to unregister the wireless device 120 as discoverable and/or as being able to receive D2D broadcast data.

The second message may comprise a second discovery message that instructs the radio network node 110 to unregister the wireless device 120 as discoverable.

The releasing of the mode relating to D2D activities may comprise disabling D2D communication by the wireless device 120. The method may comprise sending the second discovery message in response to said disabling of the D2D communication.

The disabling of the D2D communication by the wireless device 120 may be performed by a user of the wireless device 120, the user interacting with the wireless device 120 to disable D2D communication and/or by detecting that the wireless device 120 is far away from a border of a cell operated by the radio network node 110.

The second message may comprise a second data message that instructs the radio network node 110 to unregister the wireless device 120 as being able to receive D2D broadcast data.

The releasing of the mode relating to D2D activities may comprise detecting that a transmission of the D2D broadcast data is complete. The method may comprise sending the second data message in response to said detecting of that the transmission of the D2D broadcast data is complete.

### State 605 - end state

At this point, the wireless device 120 may not perform D2D communication. The method may instead for example proceed with action 601 in order to, e.g. allow a user to activate D2D communication once again.

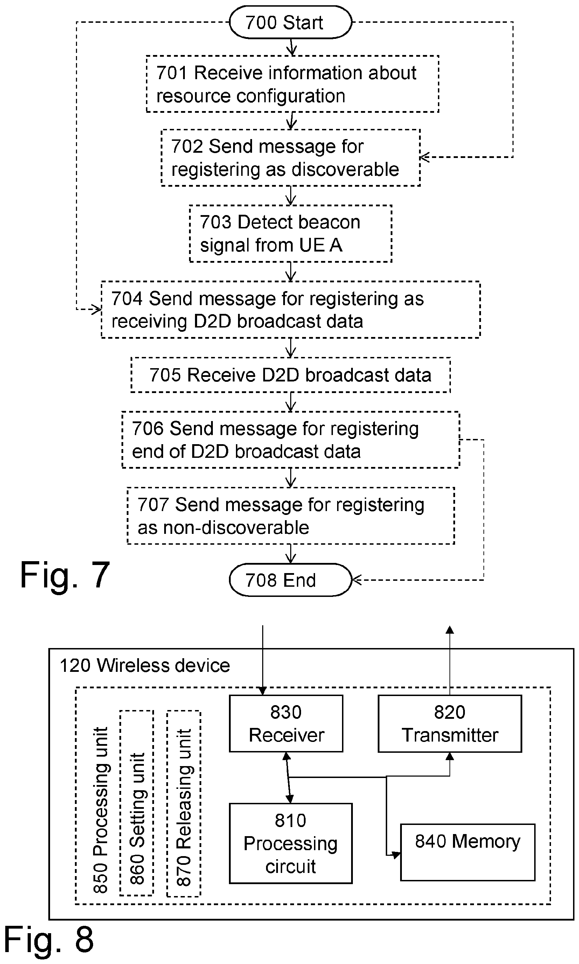

In **Figure 7****,** another schematic flowchart of an exemplifying method in the wireless device 120 is shown.

The following actions may be performed in any suitable order. See Figure 7.

With reference to **Figure 8****,** a schematic block diagram of the wireless device 120 is shown. The wireless device is configured to perform the methods in Figures 2-7.

Consequently, the wireless device 120 is configured to enable management, by a radio network node 110, of resources. As mentioned, the resources are comprised in a cellular spectrum of a mixed cellular and D2D radio network 100. The mixed cellular and D2D radio network 100 comprises the radio network node 110 and the wireless device 120. The D2D communication may be an underlay to communication in a cellular part of the mixed cellular and D2D radio network 100.

The wireless device 120 is configured to send, to the radio network node 110, a first message relating to a first set of resources. The first message indicates to the radio network node 110 that the first set of resources is to be avoided by the radio network node 110 when the radio network node 110 allocates resources for cellular transmissions associated with the wireless device 120.

The first message may instruct the radio network node 110 to register the wireless device 120 as discoverable and/or as being able to receive D2D broadcast data.

The first message may comprise a first discovery message that instructs the radio network node 110 to register the wireless device 120 as discoverable,

The first message may comprise a first data message that instructs the radio network node 110 to register the wireless device 120 as being able to receive D2D broadcast data.

Additionally, the wireless device 120 is configured to send, to the radio network node 110, a second message relating to the first set of resources. The second message indicates to the radio network node 110 that the first set of resources is available for use by the radio network node 110 when the radio network node 110 allocates resources for cellular transmissions associated with the wireless device 120.

The second message may instruct the radio network node 110 to unregister the wireless device 120 as discoverable and/or as being able to receive D2D broadcast data.

The second message may comprise a second discovery message that instructs the radio network node 110 to unregister the wireless device 120 as discoverable.

The second message may comprise a second data message that instructs the radio network node 110 to unregister the wireless device 120 as being able to receive D2D broadcast data.

The wireless device 120 may be configured to set a mode relating to D2D activities of the wireless device 120. The first message may include a report of the mode relating to D2D activities. The wireless device 120 may be configured to send the first message in response to setting of the mode relating to D2D activities. The mode relating to D2D activities may indicate one or more of discoverable, non-discoverable and start/stop of reception of D2D data.

The wireless device 120 may be configured to release, for the wireless device 120, the mode relating to D2D activities. The second message may include a report for releasing the mode relating to D2D activities. The wireless device 120 may be configured to send the second message in response to releasing of the mode relating to D2D activities.

The wireless device 120 may be configured to enable D2D communication by the wireless device 120. The wireless device 120 may be configured to send the first discovery message in response to enabling of the D2D communication.

The wireless device 120 may be configured to enable D2D communication in response to that a user of the wireless device 120 interacts with the wireless device 120 to enable D2D communication and/or in response to detecting that the wireless device 120 may be close to or at a border of a cell operated by the radio network node 110.

The wireless device 120 may be configured to detect a beacon signal from a further wireless device UE A. The wireless device 120 may be configured to send the first data message in response to detecting of the beacon signal.

The wireless device 120 may be configured to release the mode relating to D2D activities when a time period has lapsed since sending of the first message.

The wireless device 120 may be configured to disable D2D communication by the wireless device 120. The wireless device 120 may be configured to send the second discovery message in response to disabling of the D2D communication.

The wireless device 120 may be configured to disable the D2D communication in response to that a user of the wireless device 120 interacts with the wireless device 120 to disable D2D communication and/or in response to detecting that the wireless device 120 may be far away from a border of a cell operated by the radio network node 110.

The wireless device 120 may be configured to detect that a transmission of the D2D broadcast data may be complete. The wireless device 120 may be configured to send the second data message in response to detecting of that the transmission of the D2D broadcast data may be complete.

The wireless device 120 comprises **a processing circuit 810** configured to perform the methods illustrated in Figure 2-7.

In some embodiments the wireless device 120 may comprise a setting unit, a release unit, a disable unit, etc., which may be configured to perform an action corresponding there to as described above.

The wireless device 120 further comprises **a transmitter 820,** which may be configured to send one or more of the first message, the second message, numbers, values, messages, indications or parameters described herein.

The wireless device 120 further comprises **a receiver 830,** which may be configured to receive one or more of the numbers, values, messages, indications or parameters described herein.

The wireless device 120 further comprises **a memory 840** for storing software to be executed by, for example, the processing circuit. The software may comprise instructions to enable the processing circuit to perform the method in the radio network node 110 as described above.

In some examples, the wireless device 120 further comprises **a processing unit 850** configured to perform the methods of Figures 2-7.

Moreover, the wireless device 120 may comprise **a setting unit 860** configured to perform e.g. action 201 of Figure 2 or the like.

Furthermore, the wireless device 120 may comprise **a releasing unit 870** configured to perform e.g. action 204 of Figure 2, action 308 and/or 310 of Figure 3 or the like.

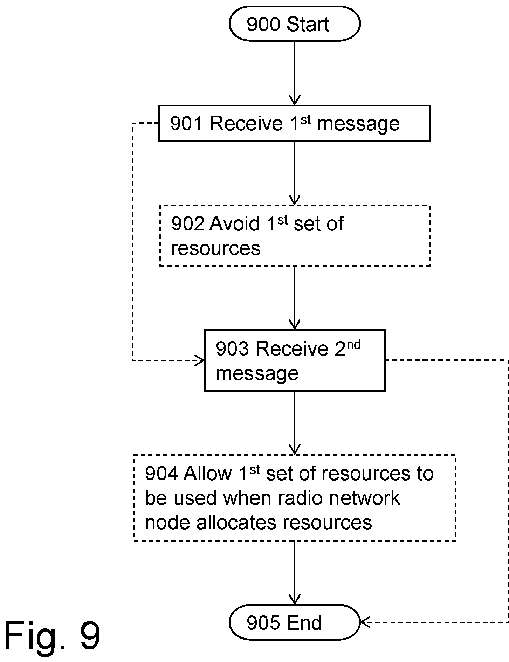

In **Figure 9****,** an exemplifying, schematic flowchart of the method, performed by the radio network node 110, for managing resources is shown.

As mentioned, the resources are comprised in a cellular spectrum of a mixed cellular and D2D radio network 100. The mixed cellular and D2D radio network 100 comprises the radio network node 110 and the wireless device 120. The D2D communication may be an underlay to communication in a cellular part of the mixed cellular and D2D radio network 100.

### State 900 - start state

Initially, the radio network node 110 may broadcast information in the network about which resources may be dynamically shared between cellular and D2D transmission. Reference is made to for example action 301 of Figure 3 and Step 1 of Figure 4.

The following actions may be performed in any suitable order.

### Action 901

The radio network node 110 receives, from the wireless device 120, a first message relating to a first set of resources. The first message indicates to the radio network node 110 that the first set of resources is to be avoided by the radio network node 110 when the radio network node 110 allocates resources for cellular transmissions associated with the wireless device 120. This action is similar to action 202.

The first message may include a report of a mode relating to D2D activities. The mode relating to D2D activities may indicate one or more of discoverable, non-discoverable and start/stop of reception of D2D data.

The first message may instruct the radio network node 110 to register the wireless device 120 as discoverable and/or as being able to receive D2D broadcast data.

The first message may comprise a first discovery message that instructs the radio network node 110 to register the wireless device 120 as discoverable,

The first message may comprise a first data message that instructs the radio network node 110 to register the wireless device 120 as being able to receive D2D broadcast data.

### Action 902

The radio network node 110 may avoid the first set of resources when the radio network node 110 allocates resources for cellular transmissions associated with the wireless device 120. The avoiding of the first set of resources is performed in response to the receiving of the first message. This action is similar to action 203.

### Action 903

The radio network node 110 receives, from the wireless device 120, a second message relating to the first set of resources. The second message indicates to the radio network node 110 that the first set of resources is available for use by the radio network node 110 when the radio network node 110 allocates resources for cellular transmissions associated with the wireless device 120. This action is similar to action 205.

The second message may include a report for releasing the mode relating to D2D activities.

The second message may instruct the radio network node 110 to unregister the wireless device 120 as discoverable and/or as being able to receive D2D broadcast data.

The second message may comprise a second discovery message that instructs the radio network node 110 to unregister the wireless device 120 as discoverable.

The second message may comprise a second data message that instructs the radio network node 110 to unregister the wireless device 120 as being able to receive D2D broadcast data.

### Action 904

The radio network node 110 may allow the first set of resources to be used when the radio network node 110 allocates resources for cellular transmissions associated with the wireless device 120. The allowing of the first set of resources is performed in response to the receiving of the second message. This action is similar to action 206.

### State 905 - end state

At this stage, the radio network node 110 may thus use any available resources for allocation and/or scheduling of cellular transmissions to/from the wireless device 120 up until, for example action 901, is once again performed.

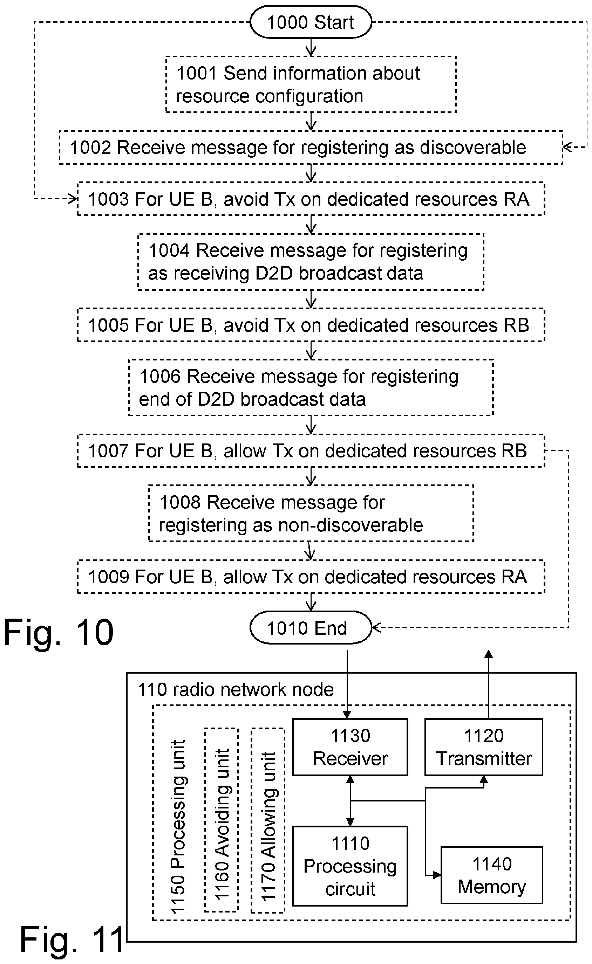

In **Figure 10****,** another schematic flowchart of an exemplifying method in the radio network node 110 is shown.

The following actions may be performed in any suitable order. See Figure 10.

With reference to **Figure 11****,** a schematic block diagram of the radio network node 110 is shown. The radio network node 110 is configured to perform the methods in Figures 2-5, 9 and/or 10. Thus, the radio network node 110 is configured to manage resources. The resources are comprised in a cellular spectrum of a mixed cellular and D2D radio network 100. The mixed cellular and D2D radio network 100 comprises the radio network node 110 and the wireless device 120.
The D2D communication may be an underlay to communication in a cellular part of the mixed cellular and D2D radio network 100.

The radio network node 110 is configured to receive, from the wireless device 120, a first message relating to a first set of resources. The first message indicates to the radio network node 110 that the first set of resources is to be avoided by the radio network node 110 when the radio network node 110 allocates resources for cellular transmissions associated with the wireless device 120.

The first message may include a report of a mode relating to D2D activities. The mode relating to D2D activities may indicate one or more of discoverable, non-discoverable and start/stop of reception of D2D data.

The first message may instruct the radio network node 110 to register the wireless device 120 as discoverable and/or as being able to receive D2D broadcast data.

The first message may comprise a first discovery message that instructs the radio network node 110 to register the wireless device 120 as discoverable,

The first message may comprise a first data message that instructs the radio network node 110 to register the wireless device 120 as being able to receive D2D broadcast data.

Moreover, the radio network node 110 is configured to receive, from the wireless device 120, a second message relating to the first set of resources. The second message indicates to the radio network node 110 that the first set of resources is available for use by the radio network node 110 when the radio network node 110 allocates resources for cellular transmissions associated with the wireless device 120.

The second message may instruct the radio network node 110 to unregister the wireless device 120 as discoverable and/or as being able to receive D2D broadcast data.

The second message may include a report for releasing the mode relating to D2D activities.

The second message may comprise a second discovery message that instructs the radio network node 110 to unregister the wireless device 120 as discoverable.

The second message may comprise a second data message that instructs the radio network node 110 to unregister the wireless device 120 as being able to receive D2D broadcast data.

The radio network node 110 may be configured to avoid the first set of resources when the radio network node 110 allocates resources for cellular transmissions associated with the wireless device 120. The radio network node 110 may be configured to avoid the first set of resources in response to receiving of the first message.

The radio network node 110 may be configured to allow the first set of resources to be used when the radio network node 110 allocates resources for cellular transmissions associated with the wireless device 120. The radio network node 110 may be configured to allow the first set of resources in response to receiving of the second message.

The radio network node 110 may comprise **a processing circuit 1110** configured to perform the methods illustrated in Figures 2-5, 9 and/or 10.

In some embodiments the radio network node 110 may comprise an avoiding unit, an allowing unit, etc., which may be configured to perform an action corresponding thereto as described above.

The radio network node 110 further comprises **a transmitter 1120,** which may be configured to send one or more of the numbers, values, messages, indications or parameters described herein.

The radio network node 110 further comprises **a receiver 1130,** which may be configured to receive one or more the first message, the second message and other numbers, values, messages, indications or parameters described herein.

The radio network node 110 further comprises **a memory 1140** for storing software to be executed by, for example, the processing circuit. The software may comprise instructions to enable the processing circuit to perform the method in the radio network node 110 as described above.

In some examples, the radio network node 110 further comprises **a processing unit 1150** configured to perform the methods of Figures 2-5, 9 and/or 10.

Moreover, the radio network node 110 may comprise **an avoiding unit 1160** configured to perform e.g. action 203 of Figure 2, action 303 of Figure 3, action 306 of Figure 3 or the like.

Furthermore, the radio network node 110 may comprise **an allowing unit 1170** configured to perform e.g. action 206 of Figure 2, action 309 of Figure 3, action 311 of Figure 3 or the like.

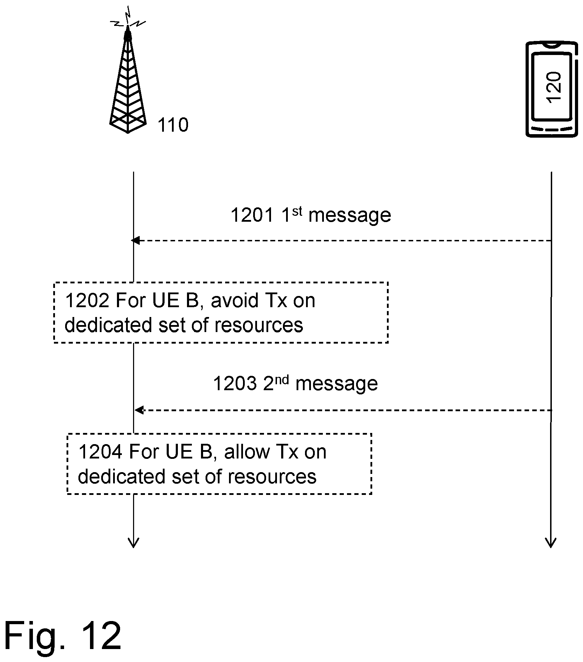

Turning to **Figure 12****,** another combined signalling and flow chart is illustrated. In this embodiment, a mixed cellular and D2D radio network comprises a radio network node 110 as in the previous example.

Moreover, the mixed cellular and D2D radio network comprises a wireless device, such as the UE B shown in the Figure. A UE A is not shown in this example.

The following actions may be performed in any suitable order.

### Action 1201

The wireless device sends a first message relating to dedicated resources, such as a specific set of resource, a first set of resources or the like. The first message, as defined in conjunction with Figure 2 and/or 12, may be similar to one or more of the first and second messages described conjunction with Figure 3.

### Action 1202

The radio network node may avoid the dedicated resources when allocating resources for cellular transmissions associated with the wireless device. The cellular transmissions may be uplink or downlink resources. This means that the radio network node may not be allowed, e.g. as suggested by the wireless device, to consider the dedicated resources as available for data when scheduling the wireless device.

### Action 1203

The wireless device may send a second message relating to the dedicated resources. This message may indicate that the dedicated resources may be used by the radio network node when scheduling the wireless device. The second message, as defined in conjunction with Figure 2 and/or 12, may be similar to one or more of the third and fourth messages described conjunction with Figure 3.

### Action 1204

The radio network node may again be allowed, e.g. since no suggested restriction from the wireless device applies, to use the dedicated set of resources. This action may be performed in response to reception of the second message. Alternatively or additionally, this action may be performed when a specific time period has lapsed since the action 1202 was performed. The specific time period may be a specific number of seconds or minutes, such as 4 seconds or other suitable value depending on for example type of wireless device. The type of the wireless device may give an indication of amount of data to be received. This means that for example a wireless sensor device may be expected to receive small amounts of data while a wireless display may be expected to receive large amounts of data, such as streaming media or similar.

As used herein, the term "processing circuit" may refer to a processing unit, a processor, an Application Specific integrated Circuit (ASIC), a Field-Programmable Gate Array (FPGA) or the like. As an example, a processor, an ASIC, an FPGA or the like may comprise one or more processor kernels. In some examples, the processing circuit may be embodied by a software or hardware module. Any such module may be a determining means, estimating means, capturing means, associating means, comparing means, identification means, selecting means, receiving means, transmitting means or the like as disclosed herein. As an example, the expression "means" may be a unit, such as a determining unit, selecting unit, etc.

As used herein, the term "memory" may refer to a memory chip, a hard disk, a magnetic storage medium, a portable computer diskette or disc, flash memory, a Universal Serial Bus (USB) memory, random access memory (RAM) or the like. Furthermore, the memory may be an internal register memory of a processor.

As used herein, the term "receiver" may refer to a radio receiver, a receiving unit or the like. Moreover, "receiver" may refer to that the processing circuit is configured, by means of hardware or software, to receive as described herein.

As used herein, the term "transmitter" may refer to a radio transmitter, a transmitting unit or the like. Moreover, "transmitter" may refer to that the processing circuit is configured, by means of hardware or software, to transmit as described herein.

As used herein, the expression "configured to" may be that a processing circuit is configured to, or adapted to, by means of software or hardware configuration, perform one or more of the actions described herein.

As used herein, the terms "number", "value" may be any kind of digit, such as binary, real, imaginary or rational number or the like. Moreover, "number", "value" may be one or more characters, such as a letter or a string of letters. "Number", "value" may also be represented by a bit string.

As used herein, the expression "in some embodiments" has been used to indicate that the features of the embodiment described may be combined with any other embodiment disclosed herein.

As used herein, the expression "transmit" and "send" are considered to be interchangeable. These expressions include transmission by broadcasting, uni-casting, group-casting and the like. In this context, a transmission by broadcasting may be received and decoded by any authorized device within range. In case of uni-casting, one specifically addressed device may receive and encode the transmission. In case of group-casting, a group of specifically addressed devices may receive and decode the transmission.

In this disclosure out of coverage means that the UE is unable to successfully communicate with any cellular network which may act as support to ProSe operations, but other definitions of out of coverage are possible and they do not affect the scope and use of the disclosed embodiments.

Even though embodiments of the various aspects have been described, many different alterations, modifications and the like thereof will become apparent for those skilled in the art. The described embodiments are therefore not intended to limit the scope of the present disclosure.

## Claims

1. A method, performed by a wireless device (120), for enabling management, by a radio network node (110), of resources, wherein the resources are comprised in a cellular spectrum of a mixed cellular and device-to-device, D2D, radio network (100), wherein the mixed cellular and D2D radio network (100) comprises the radio network node (110) and the wireless device (120), wherein the method comprises:
sending (202), to the radio network node (110), a first message relating to a first set of resources, to instruct the radio network node (110) to register the wireless device (120) as discoverable, the first set of resources for use by the wireless device at least for D2D discovery, wherein the first message indicates to the radio network node (110) that the first set of resources is to be avoided by the radio network node (110) when the radio network node (110) allocates resources for cellular transmissions associated with the wireless device (120); and
sending (205), to the radio network node (110), a second message relating to the first set of resources, to instruct the radio network node (110) to unregister the wireless device (120) as discoverable, wherein the second message indicates to the radio network node (110) that the first set of resources is available for use by the radio network node (110) when the radio network node (110) allocates resources for cellular transmissions associated with the wireless device (120).

2. The method according to claim 1, wherein the method further comprises:
setting (201) a mode relating to D2D activities of the wireless device (120), wherein the first message includes a report of the mode relating to D2D activities, wherein the sending (202) of the first message is performed in response to the setting (201) of the mode relating to D2D activities.

3. The method according to claim 2, wherein the method further comprises:
releasing (204), for the wireless device (120), the mode relating to D2D activities, wherein the second message includes a report for releasing the mode relating to D2D activities, wherein the sending (205) of the second message is performed in response to the releasing (204) of the mode relating to D2D activities.

4. The method according to claim 3, wherein the releasing (204) of the mode relating to D2D activities is performed when a time period has lapsed since the sending (202) of the first message.

5. The method according to any one of claims 2-4, wherein the mode relating to D2D activities indicates one or more of discoverable, non- discoverable and start/stop of reception of D2D data.

6. A method, performed by a radio network node (110), for managing resources, wherein the resources are comprised in a cellular spectrum of a mixed cellular and device-to-device, D2D, radio network (100), wherein the mixed cellular and D2D radio network (100) comprises the radio network node (110) and the wireless device (120), wherein the method comprises:
receiving (202), from the wireless device (120), a first message relating to a first set of resources, to instruct the radio network node (110) to register the wireless device (120) as discoverable, the first set of resources for use by the wireless device at least for D2D discovery, wherein the first message indicates to the radio network node (110) that the first set of resources is to be avoided by the radio network node (110) when the radio network node (110) allocates resources for cellular transmissions associated with the wireless device (120); and
receiving (205), from the wireless device (120), a second message relating to the first set of resources, to instruct the radio network node (110) to unregister the wireless device (120) as discoverable, wherein the second message indicates to the radio network node (110) that the first set of resources is available for use by the radio network node (110) when the radio network node (110) allocates resources for cellular transmissions associated with the wireless device (120).

7. The method according to claim 6, wherein the method further comprises: avoiding (203) the first set of resources when the radio network node (110) allocates resources for cellular transmissions associated with the wireless device (120), wherein the avoiding (203) of the first set of resources is performed in response to the receiving (202) of the first message.

8. The method according to claim 6 or 7, wherein the method further comprises: allowing (206) the first set of resources to be used when the radio network node (110) allocates resources for cellular transmissions associated with the wireless device (120), wherein the allowing (206) of the first set of resources is performed in response to the receiving (205) of the second message.

9. A wireless device (120) configured to enable management, by a radio network node (110), of resources, wherein the resources are comprised in a cellular spectrum of a mixed cellular and D2D radio network (100), wherein the mixed cellular and device-to-device, D2D, radio network (100) comprises the radio network node (110) and the wireless device (120), wherein the wireless device (120) is configured to:
send, to the radio network node (110), a first message relating to a first set of resources, to instruct the radio network node (110) to register the wireless device (120) as discoverable, the first set of resources for use by the wireless device at least for D2D discovery, wherein the first message indicates to the radio network node (110) that the first set of resources is to be avoided by the radio network node (110) when the radio network node (110) allocates resources for cellular transmissions associated with the wireless device (120); and
send, to the radio network node (110), a second message relating to the first set of resources, to instruct the radio network node (110) to unregister the wireless device (120) as discoverable, wherein the second message indicates to the radio network node (110) that the first set of resources is available for use by the radio network node (110) when the radio network node (110) allocates resources for cellular transmissions associated with the wireless device (120).

10. The wireless device (120) according to claim 9, wherein the wireless device (120) is configured to set a mode relating to D2D activities of the wireless device (120), wherein the first message includes a report of the mode relating to D2D activities, wherein the wireless device (120) is configured to send the first message in response to setting of the mode relating to D2D activities.

11. The wireless device (120) according to claim 10, wherein the wireless device (120) is configured to release, for the wireless device (120), the mode relating to D2D activities, wherein the second message includes a report for releasing the mode relating to D2D activities, wherein the wireless device (120) is configured to send the second message in response to releasing of the mode relating to D2D activities.

12. The wireless device (120) according to claim 11, wherein the wireless device (120) is configured to release the mode relating to D2D activities when a time period has lapsed since sending of the first message.

13. The wireless device (120) according to any one of claims 10-12, wherein the mode relating to D2D activities indicates one or more of discoverable, non-discoverable and start/stop of reception of D2D data.

14. A radio network node (110) configured to manage resources, wherein the resources are comprised in a cellular spectrum of a mixed cellular and device-to-device, D2D, radio network (100), wherein the mixed cellular and D2D radio network (100) comprises the radio network node (110) and the wireless device (120), wherein the radio network node (110) is configured to:
receive, from the wireless device (120), a first message relating to a first set of resources, to instruct the radio network node (110) to register the wireless device (120) as discoverable, the first set of resources for use by the wireless device at least for D2D discovery, wherein the first message indicates to the radio network node (110) that the first set of resources is to be avoided by the radio network node (110) when the radio network node (110) allocates resources for cellular transmissions associated with the wireless device (120); and
receive, from the wireless device (120), a second message relating to the first set of resources, to instruct the radio network node (110) to unregister the wireless device (120) as discoverable, wherein the second message indicates to the radio network node (110) that the first set of resources is available for use by the radio network node (110) when the radio network node (110) allocates resources for cellular transmissions associated with the wireless device (120).

15. The radio network node (110) according to claim 14, wherein the radio network node (110) is configured to avoid the first set of resources when the radio network node (110) allocates resources for cellular transmissions associated with the wireless device (120), wherein the radio network node (110) is configured to avoid the first set of resources in response to receiving of the first message.

16. The radio network node (110) according to claim 14 or 15, wherein the radio network node (110) is configured to allow the first set of resources to be used when the radio network node (110) allocates resources for cellular transmissions associated with the wireless device (120), wherein the radio network node (110) is configured to allow the first set of resources in response to receiving of the second message.

## Patentansprüche

1. Verfahren, durchgeführt durch eine drahtlose Vorrichtung (120) zum Ermöglichen der Verwaltung von Ressourcen durch einen Funknetzknoten (110), wobei die Ressourcen in einem Mobilspektrum eines gemischten Mobilfunk- und Gerät-zu-Gerät-Funknetzwerks (D2D-Funknetzwerk) (100) umfasst sind, wobei das gemischte Mobilfunk- und D2D-Funknetzwerk (100) den Funknetzknoten (110) und die drahtlose Vorrichtung (120) umfasst, wobei das Verfahren Folgendes einschließt:
Senden (202) einer ersten Nachricht an den Funknetzknoten (110) bezüglich einer ersten Ressourcengruppe, zur Anleitung des Funknetzknotens (110) zur Registrierung der drahtlosen Vorrichtung (120) als erkennbar, der ersten Ressourcengruppe zur Nutzung durch die drahtlose Vorrichtung zumindest zur D2D-Erkennung, wobei die erste Nachricht dem Funknetzknoten (110) angibt, dass die erste Ressourcengruppe von dem Funknetzknoten (110) zu vermeiden ist, wenn der Funknetzknoten (110) Ressourcen für Mobilfunkübertragungen zuordnet, die mit der drahtlosen Vorrichtung (120) assoziiert sind; und
Senden (205) einer zweiten Nachricht an den Funknetzknoten (110) bezüglich der ersten Ressourcengruppe, zur Anleitung des Funknetzknotens (110) zur De-Registrierung der drahtlosen Vorrichtung (120) als erkennbar, wobei die zweite Nachricht dem Funknetzknoten (110) angibt, dass die erste Ressourcengruppe zur Verwendung durch den Funknetzknoten (110) zur Verfügung steht, wenn der Funknetzknoten (110) Ressourcen für Mobilfunkübertragungen zuordnet, die mit der drahtlosen Vorrichtung (120) assoziiert sind.

2. Verfahren nach Anspruch 1, wobei das Verfahren ferner umfasst:
Einstellen (201) eines Modus in Bezug auf D2D-Aktivitäten der drahtlosen Vorrichtung (120), wobei die erste Nachricht einen Bericht des Modus bezüglich der D2D-Aktivitäten einschließt, wobei das Senden (202) der ersten Nachricht als Reaktion auf das Einstellen (201) des Modus in Bezug auf die D2D-Aktivitäten durchgeführt wird.

3. Verfahren nach Anspruch 2, wobei das Verfahren ferner umfasst:
Freigeben (204) der drahtlosen Vorrichtung (120), wobei der Modus sich auf D2D-Aktivitäten bezieht, wobei die zweite Nachricht einen Bericht zum Freigeben des Modus bezüglich der D2D-Aktivitäten einschließt, wobei das Senden (205) der zweiten Nachricht als Reaktion auf das Freigeben (204) des Modus in Bezug auf die D2D-Aktivitäten durchgeführt wird.

4. Verfahren nach Anspruch 3, wobei das Freigeben (204) des Modus bezüglich der D2D-Aktivitäten durchgeführt wird, wenn ein Zeitraum seit dem Senden (202) der ersten Nachricht vergangen ist.

5. Verfahren nach einem der Ansprüche 2-4, wobei der Modus bezüglich der D2D-Aktivitäten eine oder mehrere dieser Angaben enthält: erkennbar, nicht-erkennbar und Start/Stopp des Empfangs von D2D-Daten.

6. Verfahren, durchgeführt durch einen Funknetzknoten (110) zum Verwalten von Ressourcen, wobei die Ressourcen in einem Mobilspektrum eines gemischten Mobilfunk- und Gerät-zu-Gerät-Funknetzwerks (D2D-Funknetzwerk) (100) enthalten sind, wobei das gemischte Mobilfunk- und D2D-Funknetzwerk (100) den Funknetzknoten (110) und die drahtlose Vorrichtung (120) umfasst, wobei das Verfahren Folgendes einschließt:
Empfangen (202) einer ersten Nachricht von der drahtlosen Vorrichtung (120) bezüglich einer ersten Ressourcengruppe, zur Anleitung des Funknetzknotens (110) zur Registrierung der drahtlosen Vorrichtung (120) als erkennbar, der ersten Ressourcengruppe zur Nutzung durch die drahtlose Vorrichtung zumindest zur D2D-Erkennung, wobei die erste Nachricht dem Funknetzknoten (110) angibt, dass die erste Ressourcengruppe von dem Funknetzknoten (110) zu vermeiden ist, wenn der Funknetzknoten (110) Ressourcen für Mobilfunkübertragungen zuordnet, die mit der drahtlosen Vorrichtung (120) assoziiert sind; und
Empfangen (205) einer zweiten Nachricht von der drahtlosen Vorrichtung (120) bezüglich der ersten Ressourcengruppe, zur Anleitung des Funknetzknotens (110) zur De-Registrierung der drahtlosen Vorrichtung (120) als erkennbar, wobei die zweite Nachricht dem Funknetzknoten (110) angibt, dass die erste Ressourcengruppe zur Verwendung durch den Funknetzknoten (110) zur Verfügung steht, wenn der Funknetzknoten (110) Ressourcen für Mobilfunkübertragungen zuordnet, die mit der drahtlosen Vorrichtung (120) assoziiert sind.

7. Verfahren nach Anspruch 6, wobei das Verfahren ferner umfasst: Vermeiden (203) der ersten Ressourcengruppe, wenn der Funknetzknoten (110) Ressourcen für Mobilfunkübertragungen zuordnet, die mit der drahtlosen Vorrichtung (120) verbunden sind, wobei das Vermeiden (203) der ersten Ressourcengruppe als Reaktion auf das Empfangen (202) der ersten Nachricht erfolgt.

8. Verfahren nach Anspruch 6 oder 7, wobei das Verfahren ferner umfasst: Zulassen (206) der Nutzung der ersten Ressourcengruppe, wenn der Funknetzknoten (110) Ressourcen für Mobilfunkübertragungen zuordnet, die mit der drahtlosen Vorrichtung (120) verbunden sind, wobei das Zulassen (206) der ersten Ressourcengruppe als Reaktion auf das Empfangen (205) der zweiten Nachricht erfolgt.

9. Drahtlose Vorrichtung (120), konfiguriert zum Ermöglichen der Verwaltung von Ressourcen durch einen Funknetzknoten (110), wobei die Ressourcen in einem Mobilspektrum eines gemischten Mobilfunk- und D2D-Funknetzwerks (100) enthalten sind, wobei das gemischte Mobilfunk- und Gerät-zu-Gerät-Funknetzwerk (D2D-Funknetzwerk) (100) den Funknetzknoten (110) und die drahtlose Vorrichtung (120) umfasst, wobei die drahtlose Vorrichtung (120) zu Folgendem konfiguriert ist:
Senden einer ersten Nachricht an den Funknetzknoten (110) bezüglich einer ersten Ressourcengruppe, zur Anleitung des Funknetzknotens (110) zur Registrierung der drahtlosen Vorrichtung (120) als erkennbar, der ersten Ressourcengruppe zur Nutzung durch die drahtlose Vorrichtung zumindest zur D2D-Erkennung, wobei die erste Nachricht dem Funknetzknoten (110) angibt, dass die erste Ressourcengruppe von dem Funknetzknoten (110) zu vermeiden ist, wenn der Funknetzknoten (110) Ressourcen für Mobilfunkübertragungen zuordnet, die mit der drahtlosen Vorrichtung (120) assoziiert sind; und
Senden einer zweiten Nachricht an den Funknetzknoten (110) bezüglich der ersten Ressourcengruppe, zur Anleitung des Funknetzknotens (110) zur De-Registrierung der drahtlosen Vorrichtung (120) als erkennbar, wobei die zweite Nachricht dem Funknetzknoten (110) angibt, dass die erste Ressourcengruppe zur Verwendung durch den Funknetzknoten (110) zur Verfügung steht, wenn der Funknetzknoten (110) Ressourcen für Mobilfunkübertragungen zuordnet, die mit der drahtlosen Vorrichtung (120) assoziiert sind.

10. Drahtlose Vorrichtung (120) nach Anspruch 9, wobei die drahtlose Vorrichtung (120) dazu konfiguriert ist, einen Modus in Bezug auf D2D-Aktivitäten der drahtlosen Vorrichtung (120) einzustellen, wobei die erste Nachricht einen Bericht des Modus bezüglich der D2D-Aktivitäten einschließt, wobei die drahtlose Vorrichtung (120) dazu konfiguriert ist, die erste Nachricht als Reaktion auf das Einstellen des Modus in Bezug auf die D2D-Aktivitäten zu senden.

11. Drahtlose Vorrichtung (120) nach Anspruch 10, wobei die drahtlose Vorrichtung (120) dazu konfiguriert ist, den Modus in Bezug auf D2D-Aktivitäten für die drahtlose Vorrichtung (120) freizugeben, wobei die zweite Nachricht einen Bericht zum Freigeben des Modus bezüglich der D2D-Aktivitäten einschließt, wobei die drahtlose Vorrichtung (120) dazu konfiguriert ist, die zweite Nachricht als Reaktion auf das Einstellen des Modus in Bezug auf die D2D-Aktivitäten zu senden.

12. Drahtlose Vorrichtung (120) nach Anspruch 11, wobei die drahtlose Vorrichtung (120) dazu konfiguriert ist, den Modus bezüglich der D2D-Aktivitäten freizugeben, wenn ein Zeitraum seit dem Senden der ersten Nachricht vergangen ist.

13. Drahtlose Vorrichtung (120) nach einem der Ansprüche 10-12, wobei der Modus bezüglich der D2D-Aktivitäten eine oder mehrere dieser Angaben enthält: erkennbar, nicht-erkennbar und Start/Stopp des Empfangs von D2D-Daten.

14. Funknetzknoten (110), konfiguriert zum Verwalten von Ressourcen, wobei die Ressourcen in einem Mobilspektrum eines gemischten Mobilfunk- und Gerät-zu-Gerät-Funknetzwerks (D2D-Funknetzwerk) (100) umfasst sind, wobei das gemischte Mobilfunk- und D2D-Funknetzwerk (100) den Funknetzknoten (110) und die drahtlose Vorrichtung (120) umfasst, wobei der Funknetzknoten (110) zu Folgendem konfiguriert ist:
Empfangen einer ersten Nachricht von der drahtlosen Vorrichtung (120) bezüglich einer ersten Ressourcengruppe, zur Anleitung des Funknetzknotens (110) zur Registrierung der drahtlosen Vorrichtung (120) als erkennbar, der ersten Ressourcengruppe zur Nutzung durch die drahtlose Vorrichtung zumindest zur D2D-Erkennung, wobei die erste Nachricht dem Funknetzknoten (110) angibt, dass die erste Ressourcengruppe von dem Funknetzknoten (110) zu vermeiden ist, wenn der Funknetzknoten (110) Ressourcen für Mobilfunkübertragungen zuordnet, die mit der drahtlosen Vorrichtung (120) assoziiert sind; und
Empfangen einer zweiten Nachricht von der drahtlosen Vorrichtung (120) bezüglich der ersten Ressourcengruppe, zur Anleitung des Funknetzknotens (110) zur De-Registrierung der drahtlosen Vorrichtung (120) als erkennbar, wobei die zweite Nachricht dem Funknetzknoten (110) angibt, dass die erste Ressourcengruppe zur Verwendung durch den Funknetzknoten (110) zur Verfügung steht, wenn der Funknetzknoten (110) Ressourcen für Mobilfunkübertragungen zuordnet, die mit der drahtlosen Vorrichtung (120) assoziiert sind.

15. Funknetzknoten (110) nach Anspruch 14, wobei der Funknetzknoten (110) dazu konfiguriert ist, die erste Ressourcengruppe zu vermeiden, wenn der Funknetzknoten (110) Ressourcen für Mobilfunkübertragungen zuordnet, die mit der drahtlosen Vorrichtung (120) assoziiert sind, wobei der Funknetzknoten (110) dazu konfiguriert ist, die erste Ressourcengruppe als Reaktion auf das Empfangen der ersten Nachricht zu vermeiden.

16. Funknetzknoten (110) nach Anspruch 14 oder 15, wobei der Funknetzknoten (110) dazu konfiguriert ist, die erste Ressourcengruppe zur Verwendung zuzulassen, wenn der Funknetzknoten (110) Ressourcen für Mobilfunkübertragungen zuordnet, die mit der drahtlosen Vorrichtung (120) assoziiert sind, wobei der Funknetzknoten (110) dazu konfiguriert ist, die erste Ressourcengruppe als Reaktion auf das Empfangen der zweiten Nachricht zuzulassen.

## Revendications

1. Procédé, effectué par un dispositif sans fil (120), pour permettre la gestion, par un noeud de réseau radio (110), de ressources, dans lequel les ressources sont comprises dans un spectre cellulaire d'un réseau radio mixte cellulaire et dispositif à dispositif, D2D (100), dans lequel le réseau radio mixte cellulaire et D2D (100) comprend le noeud de réseau radio (110) et le dispositif sans fil (120), dans lequel le procédé comprend :
l'envoi (202), au noeud de réseau radio (110), d'un premier message se rapportant à un premier ensemble de ressources, pour ordonner au noeud de réseau radio (110) d'inscrire le dispositif sans fil (120) comme détectable, le premier ensemble de ressources étant pour une utilisation par le dispositif sans fil au moins pour la détection D2D, dans lequel le premier message indique au noeud de réseau radio (110) que le premier ensemble de ressources doit être évité par le noeud de réseau radio (110) lorsque le noeud de réseau radio (110) alloue des ressources pour des transmissions cellulaires associées au dispositif sans fil (120) ; et
l'envoi (205), au noeud de réseau radio (110), d'un deuxième message se rapportant au premier ensemble de ressources, pour ordonner au noeud de réseau radio (110) de désinscrire le dispositif sans fil (120) comme détectable, dans lequel le deuxième message indique au noeud de réseau radio (110) que le premier ensemble de ressources est disponible pour une utilisation par le noeud de réseau radio (110) lorsque le noeud de réseau radio (110) alloue des ressources pour des transmissions cellulaires associées au dispositif sans fil (120).

2. Procédé selon la revendication 1, dans lequel le procédé comprend en outre :
le réglage (201) d'un mode se rapportant à des activités D2D du dispositif sans fil (120), dans lequel le premier message inclut un rapport du mode se rapportant à des activités D2D, dans lequel l'envoi (202) du premier message est effectué en réponse au réglage (201) du mode se rapportant à des activités D2D.

3. Procédé selon la revendication 2, dans lequel le procédé comprend en outre :
la libération (204), pour le dispositif sans fil (120), du mode se rapportant à des activités D2D, dans lequel le deuxième message inclut un rapport pour libérer le mode se rapportant à des activités D2D, dans lequel l'envoi (205) du deuxième message est effectué en réponse à la libération (204) du mode se rapportant à des activités D2D.

4. Procédé selon la revendication 3, dans lequel la libération (204) du mode se rapportant à des activités D2D est effectuée lorsqu'un laps de temps s'est écoulé depuis l'envoi (202) du premier message.

5. Procédé selon l'une quelconque des revendications 2 à 4, dans lequel le mode se rapportant à des activités D2D indique un ou plusieurs parmi détectables, non détectables et démarrage/arrêt de réception de données D2D.

6. Procédé, effectué par un noeud de réseau radio (110), pour la gestion de ressources, dans lequel les ressources sont comprises dans un spectre cellulaire d'un réseau radio mixte cellulaire et dispositif à dispositif, D2D (100), dans lequel le réseau radio mixte cellulaire et D2D (100) comprend le noeud de réseau radio (110) et le dispositif sans fil (120), dans lequel le procédé comprend :
la réception (202), à partir du dispositif sans fil (120), d'un premier message se rapportant à un premier ensemble de ressources, pour ordonner au noeud de réseau radio (110) d'inscrire le dispositif sans fil (120) comme détectable, le premier ensemble de ressources étant pour une utilisation par le dispositif sans fil au moins pour la détection D2D, dans lequel le premier message indique au noeud de réseau radio (110) que le premier ensemble de ressources doit être évité par le noeud de réseau radio (110) lorsque le noeud de réseau radio (110) alloue des ressources pour des transmissions cellulaires associées au dispositif sans fil (120) ; et
la réception (205), à partir du dispositif sans fil (120), d'un deuxième message se rapportant au premier ensemble de ressources, pour ordonner au noeud de réseau radio (110) de désinscrire le dispositif sans fil (120) comme détectable, dans lequel le deuxième message indique au noeud de réseau radio (110) que le premier ensemble de ressources est disponible pour une utilisation par le noeud de réseau radio (110) lorsque le noeud de réseau radio (110) alloue des ressources pour des transmissions cellulaires associées au dispositif sans fil (120).

7. Procédé selon la revendication 6, dans lequel le procédé comprend en outre :
le fait d'éviter (203) le premier ensemble de ressources lorsque le noeud de réseau radio (110) alloue des ressources pour des transmissions cellulaires associées au dispositif sans fil (120), dans lequel le fait d'éviter (203) le premier ensemble de ressources est effectué en réponse à la réception (202) du premier message.

8. Procédé selon la revendication 6 ou 7, dans lequel le procédé comprend en outre :
le fait de permettre (206) au premier ensemble de ressources d'être utilisé lorsque le noeud de réseau radio (110) alloue des ressources pour des transmissions cellulaires associées au dispositif sans fil (120), dans lequel le fait de permettre (206) au premier ensemble de ressources est effectué en réponse à la réception (205) du deuxième message.

9. Dispositif sans fil (120) configuré pour permettre la gestion, par un noeud de réseau radio (110), de ressources, dans lequel les ressources sont comprises dans un spectre cellulaire d'un réseau radio mixte cellulaire et D2D (100), dans lequel le réseau radio mixte cellulaire et dispositif à dispositif, D2D (100) comprend le noeud de réseau radio (110) et le dispositif sans fil (120), dans lequel le dispositif sans fil (120) est configuré pour :
envoyer, au noeud de réseau radio (110), un premier message se rapportant à un premier ensemble de ressources, pour ordonner au noeud de réseau radio (110) d'inscrire le dispositif sans fil (120) comme détectable, le premier ensemble de ressources étant pour une utilisation par le dispositif sans fil au moins pour la détection D2D, dans lequel le premier message indique au noeud de réseau radio (110) que le premier ensemble de ressources doit être évité par le noeud de réseau radio (110) lorsque le noeud de réseau radio (110) alloue des ressources pour des transmissions cellulaires associées au dispositif sans fil (120) ; et
envoyer, au noeud de réseau radio (110), un deuxième message se rapportant au premier ensemble de ressources, pour ordonner au noeud de réseau radio (110) de désinscrire le dispositif sans fil (120) comme détectable, dans lequel le deuxième message indique au noeud de réseau radio (110) que le premier ensemble de ressources est disponible pour une utilisation par le noeud de réseau radio (110) lorsque le noeud de réseau radio (110) alloue des ressources pour des transmissions cellulaires associées au dispositif sans fil (120).

10. Dispositif sans fil (120) selon la revendication 9, dans lequel le dispositif sans fil (120) est configuré pour régler un mode se rapportant à des activités D2D du dispositif sans fil (120), dans lequel le premier message inclut un rapport du mode se rapportant à des activités D2D, dans lequel le dispositif sans fil (120) est configuré pour envoyer le premier message en réponse au réglage du mode se rapportant à des activités D2D.

11. Dispositif sans fil (120) selon la revendication 10, dans lequel le dispositif sans fil (120) est configuré pour libérer, pour le dispositif sans fil (120), le mode se rapportant à des activités D2D, dans lequel le deuxième message inclut un rapport pour libérer le mode se rapportant à des activités D2D, dans lequel le dispositif sans fil (120) est configuré pour envoyer le deuxième message en réponse à la libération du mode se rapportant à des activités D2D.

12. Dispositif sans fil (120) selon la revendication 11, dans lequel le dispositif sans fil (120) est configuré pour libérer le mode se rapportant à des activités D2D lorsqu'un laps de temps s'est écoulé depuis l'envoi du premier message.

13. Dispositif sans fil (120) selon l'une quelconque des revendications 10 à 12, dans lequel le mode se rapportant à des activités D2D indique un ou plusieurs parmi détectables, non détectables et démarrage/arrêt de réception de données D2D.

14. Noeud de réseau radio (110) configuré pour gérer des ressources, dans lequel les ressources sont comprises dans un spectre cellulaire d'un réseau radio mixte cellulaire et dispositif à dispositif, D2D (100), dans lequel le réseau radio mixte cellulaire et D2D (100) comprend le noeud de réseau radio (110) et le dispositif sans fil (120), dans lequel le noeud de réseau radio (110) est configuré pour :
recevoir, à partir du dispositif sans fil (120), un premier message se rapportant à un premier ensemble de ressources, pour ordonner au noeud de réseau radio (110) d'inscrire le dispositif sans fil (120) comme détectable, le premier ensemble de ressources étant pour une utilisation par le dispositif sans fil au moins pour la détection D2D, dans lequel le premier message indique au noeud de réseau radio (110) que le premier ensemble de ressources doit être évité par le noeud de réseau radio (110) lorsque le noeud de réseau radio (110) alloue des ressources pour des transmissions cellulaires associées au dispositif sans fil (120) ; et
recevoir, à partir du dispositif sans fil (120), un deuxième message se rapportant au premier ensemble de ressources, pour ordonner au noeud de réseau radio (110) de désinscrire le dispositif sans fil (120) comme détectable, dans lequel le deuxième message indique au noeud de réseau radio (110) que le premier ensemble de ressources est disponible pour une utilisation par le noeud de réseau radio (110) lorsque le noeud de réseau radio (110) alloue des ressources pour des transmissions cellulaires associées au dispositif sans fil (120).

15. Noeud de réseau radio (110) selon la revendication 14, dans lequel le noeud de réseau radio (110) est configuré pour éviter le premier ensemble de ressources lorsque le noeud de réseau radio (110) alloue des ressources pour des transmissions cellulaires associées au dispositif sans fil (120), dans lequel le noeud de réseau radio (110) est configuré pour éviter le premier ensemble de ressources en réponse à la réception du premier message.

16. Noeud de réseau radio (110) selon la revendication 14 ou 15, dans lequel le noeud de réseau radio (110) est configuré pour permettre au premier ensemble de ressources d'être utilisé lorsque le noeud de réseau radio (110) alloue des ressources pour des transmissions cellulaires associées au dispositif sans fil (120), dans lequel le noeud de réseau radio (110) est configuré pour autoriser le premier ensemble de ressources en réponse à la réception du deuxième message.
